(19)

Europäisches
Patentamt
European
Patent Office
Office européen
des brevets

(11) **EP 4 437 435 B1**

(12) **EUROPEAN PATENT SPECIFICATION**

(45) Date of publication and mention
of the grant of the patent:
**31.12.2025 Bulletin 2026/01**

(21) Application number: **22899398.6**

(22) Date of filing: **23.11.2022**

(51) International Patent Classification (IPC):
**G06Q 10/083** (2024.01)   **G06Q 10/30** (2023.01)
**G06Q 30/018** (2023.01)   **G06Q 30/0242** (2023.01)

(52) Cooperative Patent Classification (CPC):
**G06Q 30/0242; G06Q 10/083; G06Q 10/30;
G06Q 30/018**

(86) International application number:
**PCT/US2022/050926**

(87) International publication number:
**WO 2023/097018 (01.06.2023 Gazette 2023/22)**

(54) **SYSTEM AND METHOD FOR DETERMINING ENVIRONMENTAL FOOTPRINT**

SYSTEM UND VERFAHREN ZUR BESTIMMUNG DES UMGEBUNGSFUSSABDRUCKS

SYSTÈME ET PROCÉDÉ DE DÉTERMINATION DE L'EMPREINTE ENVIRONNEMENTALE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **24.11.2021   US 202163283081 P**

(43) Date of publication of application:
**02.10.2024   Bulletin 2024/40**

(73) Proprietor: **Okeanos Group, LLC
Miami Beach, FL 33139 (US)**

(72) Inventor: **CUETARA, Florencio Gomez
Miami Beach, Florida 33139 (US)**

(74) Representative: **Dilg, Haeusler, Schindelmann
Patentanwaltsgesellschaft mbH
Leonrodstraße 58
80636 München (DE)**

(56) References cited:
**US-A1- 2007 225 991     US-A1- 2010 131 343
US-A1- 2010 217 715     US-A1- 2012 173 444
US-A1- 2013 041 832     US-A1- 2013 311 215
US-A1- 2014 188 752     US-A1- 2014 188 752
US-A1- 2021 224 819**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**FIELD OF THE INVENTION**

The disclosed invention generally relates to environmentally friendly packaging and more specifically to calculating environmental footprint, for example, carbon footprint savings, and a system that provides consumers with lifecycle analysis information.

**BACKGROUND**

The packaging industry has evolved significantly over the years. There used to be a time where users had no way of knowing the ingredients of the purchased product, but packaging now includes all kinds of useful information for consumers. With environmental concerns being brought to the public forefront, packaging that conveys its environmental footprint seems like the next logical evolution in the packaging industry.

However, no entity has yet been able to develop a system for delivering this information to consumers, and for good reason; the technical challenges in developing such a process are enormous. For one, developing a methodology that can calculate environmental footprint is difficult as numerous variables affect packaging's footprint, ranging from the origin of the packaging's materials, country specific transportation and lifecycle analysis data, the recipe of the packaging, etc. Providing packaging footprint data to the consumer also involves compiling and maintaining several databases of country specific data. With many user-specific, product specific, and country specific variables, it also is impractical, if not impossible to print this information directly on the package, for instance, nutrition facts. Finally, to maximize the positive environmental impact of sustainable packaging, it's important to provide users with personalized data such as advertisements to encourage continued purchases of products using sustainable packaging, as well as informing users of optimal disposal options.

US2013/311215A1 and US2021/224819A1 disclose methods to estimate the environmental footprint in a supply chain once a product has been scanned. However, they do not address the reduction in environmental footprint when a different packaging material is used.

**SUMMARY**

Made-from-stone packaging provides significant environmental benefits. Rather than having to rely on consumers to dispose of packaging properly, made-from-stone packaging reduces plastic at the source, by replacing traditional plastics such as polypropylene, polystyrene, and polyethylene, with calcium carbonate. It is renewable, widely abundant, and can be sourced from all around the world. By mixing calcium carbonate with a small amount of plastic, and by locally sourcing materials, made-from- stone packaging generates a significant reduction in carbon footprint, water footprint, and plastic pollution.

In some embodiments, the present disclosure is a methodology and process executing on one or more for calculating environmental footprints and provides lifecycle analysis information, including conveying the environmental footprint realized as a result of purchasing a product, such as a product with made-from-stone packaging.

In some embodiments, the present disclosure is method executed on one or more computers for determining environmental footprint for a product or packaging using plastic alternative material. The method includes: receiving information from a user scanning a code on the product or packaging, wherein the received information includes time of the scan, geolocation of the user, user's language and information about the product or packaging; calculating a baseline emissions by quantifying an amount of conventional plastic production that has been avoided by using alternative material for the product or packaging by considering product or packaging weight and density; adjusting the environmental footprint based on product or packaging weight and density relative to weight and density of a plastic alternative; adjusting the environmental footprint based on location of where the product was acquired; factoring in carbon footprint of the transporting the product or packaging from an origination location to the location of where the product was acquired; and generating an environmental footprint report for transmission to the user, wherein the report includes environmental benefits generated as a result of purchasing the product using plastic alternative material.

In some embodiments, the present disclosure is system for determining environmental footprint for a product or packaging using plastic alternative material. The system includes: a receiving port for receiving information from a user scanning a code on the product or packaging, wherein the received information includes time of the scan, geolocation of the user, user's language and information about the product or packaging; and one or more computers for calculating a baseline emissions by quantifying an amount of conventional plastic production that has been avoided by using alternative material for the product or packaging by considering product or packaging weight and density; adjusting the environmental footprint based on product or packaging weight and density relative to weight and density of a plastic alternative; adjusting the environmental footprint based on location of where the product was acquired; factoring in carbon footprint of the transporting the product or packaging from an origination location to the location of where the product was acquired; and generating an environmental footprint report for transmission to the user, wherein the report includes environmental benefits generated as a result of purchasing the product using plastic alternative material.

In some embodiments, the present disclosure is a non-transitory tangible storage medium for storing a plurality of computer instructions, the computer instructions when executed by one or more computers performing a method for determining environmental footprint for a product or packaging using plastic alternative material. The method inlcudes: receiving information from a user scanning a code on the product or packaging, wherein the received information includes time of the scan, geolocation of the user, user's language and information about the product or packaging; calculating a baseline emissions by quantifying an amount of conventional plastic production that has been avoided by using alternative material for the product or packaging by considering product or packaging weight and density; adjusting the environmental footprint based on product or packaging weight and density relative to weight and density of a plastic alternative; adjusting the environmental footprint based on location of where the product was acquired; and factoring in carbon footprint of the transporting the product or packaging from an origination location to the location of where the product was acquired; generating an environmental footprint report for transmission to the user, wherein the report includes environmental benefits generated as a result of purchasing the product using plastic alternative material.

## BRIEF DESCRIPTION OF THE DRAWINGS

A more complete appreciation of the disclosed invention, and many of the attendant features and aspects thereof, will become more readily apparent as the disclosed invention becomes better understood by reference to the following detailed description when considered in conjunction with the accompanying drawings in which like reference symbols indicate like components.

FIGs. 1A and 1B show exemplary screenshots of a generated report, according to some embodiments of the present disclosure.

FIG. 2 is an exemplary process flow, according to some embodiments of the present disclosure.

FIG. 3 illustrates an example of input data for the density adjustment factor, according to some embodiments of the present disclosure.

FIG. 4 shows various carbon dioxide ($CO_2$) footprints for different types of transportation vehicles, according to some embodiments of the present disclosure.

FIG. 5 is an exemplary process flow for determining an environmental footprint, according to some embodiments of the present disclosure.

## DETAILED DESCRIPTION

In some embodiments, the present disclosure is a methodology and process executing on one or more for calculating environmental footprints, for example, carbon footprint, and a system that provides consumers with lifecycle analysis information, including conveying the footprint realized as a result of purchasing a product, such as a product with made-from-stone packaging. In some embodiments, when a user scans a Quick Response (QR) code located on the packaging of a product, the system calculates an environmental footprint of the packaging using various algorithms and determines a footprint for the packaging and reports the results with lifecycle analysis information. Stone as used here include not only stones or rocks, but also, any naturally occurring solid mass or aggregate of minerals or mineraloid matter form the Earth's outer solid layer.

In some embodiments, a consumer downloads an application on their computer or mobile device. When the consumer buys or obtain a product, they scan the QR on the product (or its packaging) and receive a report about the carbon (and water) footprint o the products and/or its packaging. The consumer may register on a website as a member or invoke the application (process) as a guest. Environmental footprints may include carbon footprint, other greenhouse gas footprint and/or water footprint.

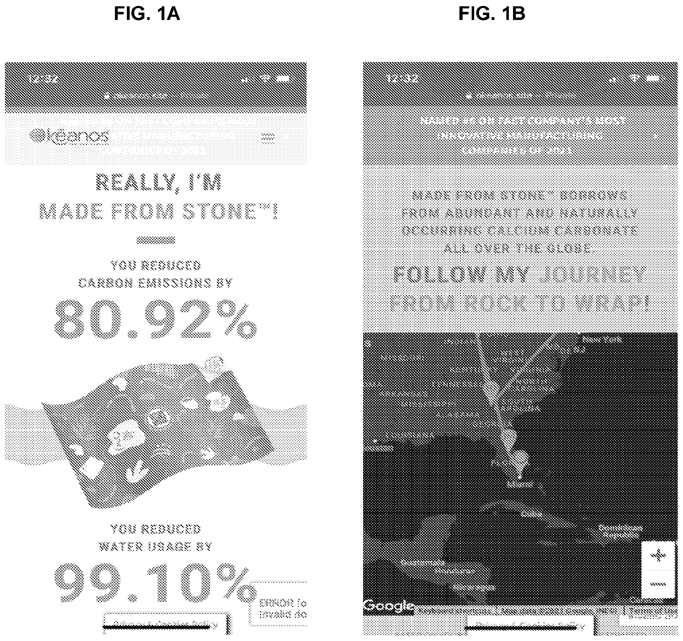

FIGs. 1A and 1B show exemplary screenshots of a generated report, according to some embodiments of the present disclosure. FIG. 1A shows an exemplary report for the carbon and water footprint generated as a result of using Made from stone packaging. These environmental footprints are calculated by comparing the known footprint of traditional plastics with Made from stone packaging, the formula for which will be described below. FIG. 1B illustrates a journey from calcium carbonate to the packaging of a product, as a result of QR scanning of the packaging. In some embodiments, the report may include consumer advertising that offers consumers a link to explore other made from stone products as well as allowing them to discover how the environmental footprints were generated, by clicking on the center circle. In some embodiments, the report provides links to various philanthropic efforts and advertisement that invites users to join a network of influencers or advertisers.

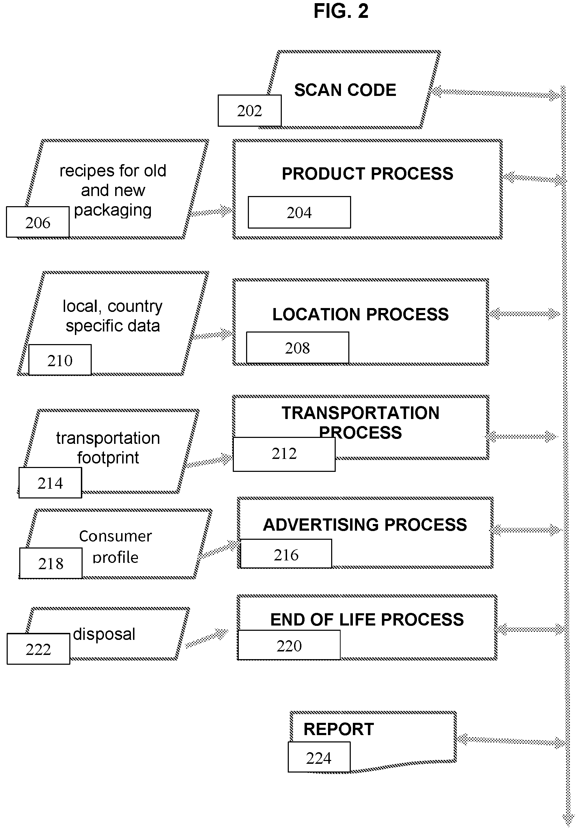

FIG. 2 is an exemplary process flow, according to some embodiments of the present disclosure. In some embodiments, the methodology calculates user-specific lifecycle analysis and environmental footprint savings when using plastic alternatives instead of conventional plastic. As shown in FIG. 2, the process, at block 202, takes information generated at the time of the QR scan, such as, the user's location, language, and operating system found, and converts the information into a customized lifecycle analysis report, for example, similar to the report shown in FIG. 1A. The report, including environmental footprint and/or percentage of reduction in carbon emissions and water usage for the packaging, is then displayed to the consumer. The report may also include a map (e.g., similar to the map in FIG. 1B) displaying the origins of the plastic alternative material(s) (for example, calcium carbonate), as it can be sourced from all over the world, its journey (and/or travel path) from stone to packaging, which is important as transportation and locally sourcing materials has an impact on total environmental footprint, customized disposal solutions and advertising, as well as ads linking to philanthropic efforts. For example, the report may show where the plastic alternative (e.g., stone) was mined, processed, transported, manufactured as packaging for a product, and where the product travelled until it reached the consumer.

In some embodiments, a user, registered with an application (e.g., a website) scans the QR code on a product or its packaging. Information such, as the time of the scan, IP Address and Geolocation of the user, operating system of user's device (e.g., a smart phone), user's language (for example, the language used on the packing), the product that user scanned, and a user ID (for repeat users) is saved in a database. In some embodiments, the Geolocation of the user is determined automatically via a GPS device or other location determining processes, such as triangularization of time of arrival from the user's device.

This information is then utilized in various processes/algorithms that also reference data pulled from various databases. Examples of various information that are generated after the QR scan may include customer location, customer age, customer gender, customer operating system, and customer browser type.

The methodology calculates user-specific lifecycle analysis and environmental footprints (including environmental footprint savings) when using plastic alternatives instead of conventional plastic. As shown in block 204, the process analyzes product factors that affect environmental footprint. The process considers the product that the user scanned and compares the recipes of plastic alternative versus conventional plastic. In some embodiments, the process calculates C02 and H20 footprint (and/or footprint savings), which factors in formulation comparison (comparing previous packaging type to plastic alternatives packaging), product weight and density, utilizing information in a database 206. Database 206 contains recipes for old and new packaging. In some embodiments, database 206 is automatically revised and updated based on its usage and new information available, using machine learning or artificial intelligence technologies. In some embodiments, the process considers the product that the user scanned and compares the recipes of plastic alternative versus conventional plastic packaging. In some embodiments, the process uses the following equation for the comparison:

$$1 - ((N + (D*T)/(P+(D*T))) \quad \text{Eq. (1)}$$

where P is the baseline product carbon (or water) footprint, N is the plastic alternative carbon (or water) footprint, D is the distance that the product/packaging travelled from its origin to the point of purchase, and T is a transportation factor, in miles or kilometer. Variable T is a localized transportation factor that represents the greenhouse gas emission and/or water usage per kilometer traveled. Localized means that this variable accounts for differences in footprint emissions when transporting in once country versus another. Meanwhile, D is the distance in kilometers that the product has traveled. Multiplying D and T will result in the total footprint emissions of transporting the product.

Referring back to FIG. 2, in block 208, the process considers product material origin and country specific lifecycle analysis to calculate the environmental footprint, using information in a database 210. Database 210 contains local, country specific data. For example, a kilowatt of energy in France may have a lower carbon footprint in the U.S. In some embodiments, the process considers material origin and country specific lifecycle analysis.

In some embodiments, baseline emissions are determined by quantifying the amount of conventional plastic production that has been avoided through the manufacturing and sale of plastic substitute using alternative materials. In the quantification, a product developer determines the quantity of the alternative material and assumes that it displaces a specific conventional plastic polymer, such as polyethylene. In some embodiments, the base line is calculated by the following equation:

$$BE_{tp,y} = \sum i \left( Q_{AM,y} * DAF_i EF_i \right) \quad (2)$$

Here, $BE_{tp,y}$ represents the baseline emissions from traditional plastic manufacturing in time period y. $Q_{ÆM,y}$ represents the net quantity of alternative material in metric tons produced by the project in year y that is used to produce a plastic substitute. This quantity does not include traditional plastics that are blended with the alternative material, and $DAF_i$ represents the density adjustment factor for plastic type i.

In some cases, an alternative packaging/product may be heavier or denser (or less heavy or less dense) compared to the type of material it is displacing. If the alternative material is heavier that the plastic it is displacing, then the level of carbon saving is adjusted (lowered), and vice versa. The density adjustment (DAF) can be determined using the following equation:

$$DAF_i = \frac{WO_i}{WAP_i} \qquad (3)$$

where:

$WO_i$= Weight in grams of a representative sample of the original plastic type i

$WAP_i$= Weight in grams of a representative sample of the alternative product, replacing plastic type i, *EF*I represents the emission factor associated with the production of conventional plastic materials, measured in tCO2e/metric ton of plastic for plastic type i. Table 1 below shows emissions factors for the different types of plastic, which are substituted into variable "i" in the baseline formula in Equation (2) above. The different letterings in Table 1 correspond to different traditional plastic types, which have different emission footprints. The output of this formula then serves as variable P in the overall comparison formulation. Meanwhile, the emission factor for plastic packaging alternative (e.g., made-from-stone) is found and is substituted into variable N in the overall comparison formulation.

**Table 1**

| Plastic Type | Emission Factor (tCO$_2$e/metric ton of plastic material produced) |
|---|---|
| HDPE | 1.41 |
| LDPE | 1.77 |
| PET | 2.30 |
| LLDPE | 1.53 |
| PP | 1.52 |
| PS | 2.55 |
| PVC | 2.02 |
| ABS | 3.25 |
| TPU | 2.49 |
| PC | 2.49 |

Table 2 below shows exemplary data structures stored in a database for plastic alternatives and includes footprints corresponding to different types of stone. Also, overall environmental impacts for each calcium carbonate product (per dry ton of product)

**Table 2:**

| Impact Category | Unit (per dry ton) | Screened Grade | Coarse Dry 30μg | Coarse Dry 20μg | Fine Slurry 3μg | Fine Treated 3μg |
|---|---|---|---|---|---|---|
| Global Warming | kg CO$_2$ eq | 2.24E+01 | 3.11E+01 | 5.22E+01 | 1.83E+02 | 2.69E+02 |
| Fossil Fuel Depletion | MJ surplus | 2.29E+01 | 3.36E+01 | 6.12E+01 | 1.64E+02 | 2.22E+02 |
| Eutrophication | kg N eq | 2.80E-02 | 2.45E-02 | 3.81E-02 | 8.30 E-02 | 1.83E-01 |
| 5mog | kg O$_3$ eq | 9.74E+00 | 8.83E+00 | 1.54E+01 | 2.49E+01 | 2.98E+01 |
| Acidification | kg SO$_2$ eq | 4.72E-01 | 4.64E-01 | 7.41E-01 | 1.90E+00 | 2.58E+00 |
| Ozone Depletion | kg CFC-$_{11}$ eq | 2.66E-07 | 2.89E-07 | 3.04E-07 | 1.05E-06 | 2.53E-06 |
| Carcinogenics | CTU$_h$ | 3.91E-07 | 3.68E-07 | 6.07E-07 | 1.28E-06 | 2.38E-06 |
| Non-carcinogenics | CTU$_h$ | 1.77E-06 | 2.44E-06 | 4.33E-06 | 1.03E-05 | 1.24E-05 |

(continued)

| Impact Category | Unit (per dry ton) | Screened Grade | Coarse Dry 30μg | Coarse Dry 20μg | Fine Slurry 3μg | Fine Treated 3μg |
|---|---|---|---|---|---|---|
| Respiratory Effects | kg $PM_{2.5}$ eq | 1.91E-02 | 1.82E-02 | 2.67E-02 | 8.54E-02 | 1.58E-01 |
| Ecotoxicity | $CTU_\varepsilon$ | 3.64E+01 | 5.16E+01 | 8.64E+01 | 1.85E+02 | 3.22E+02 |
| Cumulative Energy Demand | MJ | 3.12E+02 | 4.33E+02 | 7.27E+02 | 2.66E+03 | 4.36E+03 |

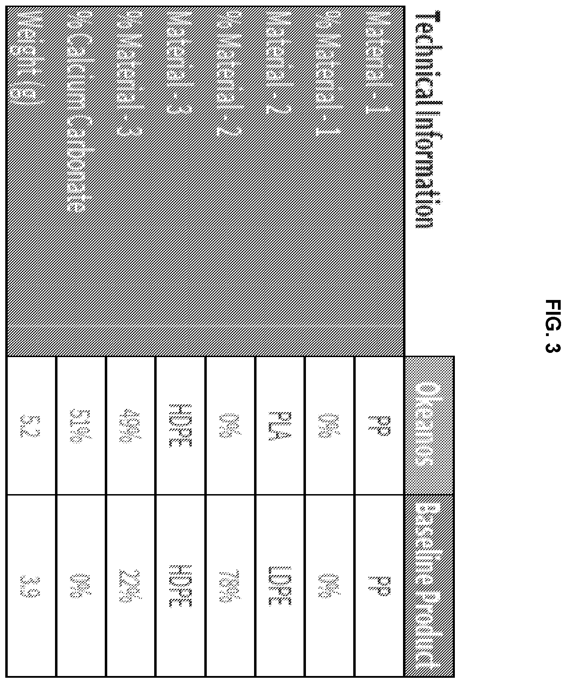

The recipes affect environmental footprint analysis in different ways. For example, waste incineration factors into a product's footprint because incinerating conventional plastics and plastic alternatives release carbon dioxide ($CO_2$) into the atmosphere at different rates. Comparing the density and weight of the plastic alternative to conventional plastic also factors into environmental footprint analysis because higher weight/density reduces the level of $CO_2$ footprint, and vice versa. Density is factored into the product- based calculation using the density adjustment calculation found in Equation (3). An example of input data for the density adjustment factor is shown in FIG. 3, where the product weights shown are substituted into the density adjustment formula to adjust the percentage of the footprint. FIG. 3 compares formulation of the traditional plastic product (the baseline product) and the plastic alternative. For example, the chart outlines that the traditional plastic product, in this case, a plastic water cup, contains 78% of low density polyethylene (LDPE) and 22% of high density polyethylene (HDPE). Meanwhile, the water cup for the alternative packing contains 0% LDPE and 49% of HDPE.

Referring back to FIG. 2, in some embodiments, the process in block 208 adds to the overall environmental footprint analysis by factoring in location; that is country specific lifecycle analysis and material origin. For example, going back to incineration, countries incinerate waste at different rates. An exemplary table of country specific incineration rates is shown in Table 3 below. Country specific incineration rates will increase or decrease the environmental footprint depending on the customer's location, as the country where the customer is located will be the country where the product is ultimately disposed. The material's origin also factors into the analysis. For example, France has a lower carbon footprint per kilowatt of energy than the US, so depending on the country of manufacture, the footprint changes. Both manufacturing plants that produce conventional plastics and plastic alternatives are powered by fossil fuels, but the amount of energy required to produce each, and in turn greenhouse gas emissions, can differ. The methodology compares the greenhouse gas emissions from these two types of facilities.

**Table 3**

| Country | Incineration Percent |
|---|---|
| Andorra | 52.10 |
| Australia | 9.77 |
| Austria | 37.90 |
| Belgium | 43.39 |
| Bulgaria | 2.75 |
| Bermuda | 67.60 |
| Canada | 3.00 |
| Switzerland | 47.00 |
| Channel Islands | 16.44 |
| Chile | 0.14 |
| China | 29.84 |

In some embodiments, the process in block 212 tactors transportation into the overall environmental footprint analysis and provides variables T and D in the footprint savings of Equation (1). This process pulls data from a locally approved transportation footprint database 214 to factor the user's geolocation into account, as transporting in different countries to deliver the product to user has different carbon footprints. In some embodiments, the process also keeps track of distribution points to produce a map in the reporting that shows users the packaging's journey from stone to product, as shown in FIG. 1B. The map may show the materials source origin, where it became the compound that is then converted into bags, containers, and other functional packaging, all the way to the store where the user purchased the product.

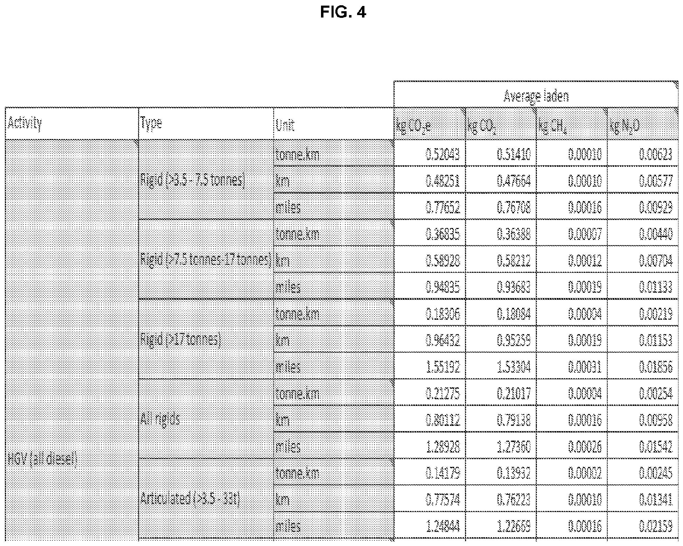

The mode of transportation may also play a role in the footprint calculation. FIG. 4 depicts an exemplary table stored in a database (e.g., database 214 in FIG. 2) for the transportation footprint. FIG. 4 shows various CO2 footprints for different types of transportation vehicles. This burden is substituted for variable T in the footprint comparison formula and is then multiplied by the distance that the packaging traveled, variable D, which is found, for example, using a Google API™. By locally sourcing materials, CO2 footprint is reduced by decreasing distance and transportation emissions.

In some embodiments, the process in block 216 analyses user data to tailor advertising by taking into account the number of times user scanned the product/package, user's location, and the types of products user typically purchases. Rather than focusing on savings calculations, the advertising algorithm in block 216 designs and transmits user specific ads and philanthropy messaging. For example, if the user repeatedly purchases a specific product, rice for example, the algorithm takes note and suggests that the user buy another type of rice also utilizing made-from-stone packaging.

In some embodiments, the process in block 216 relies on many of the inputs generated at time of customer scan. For example, a customer's location can affect what philanthropic efforts are shown on the advertising screen, as there can be specific efforts going on in the customer's location. In addition, individualized customer data will be useful to target specific ads related to plastic alternative products.

Table 4 below shows exemplary information for customer specific scan data. For example, since customer "0221378" has scanned 4 times, the process recognizes that this customer is likely to purchase and scan today, and will look at prior purchased products, such as Rice Packets, to curate suggestions to that customer.

**Table 4**

| : Customer ID | Customer Location | Product Type | Repeat Customer? | Number of Times Scanned |
|---|---|---|---|---|
| 0221378 | Bogota, Colombia | Grocery Bag | Yes | 4 |
| 0221379 | Mumbai, India | Rice Packet | Yes | 2 |
| 0221380 | Miami, USA | Rice Packet | No | 1 |
| 0221381 | Bratislava, Slovakia | Grocery Bag | Yes | 3 |
| 0221382 | Cincinnati, USA | Grocery Bag | No | 1 |

In some embodiments, the end-of-life algorithm in block 220 uses inputs to convey to consumer best disposal options by using their location and a database 222.

For example, some regions may not be able to compost, some regions may not have nearby recycling, etc. The process utilizes a user's geolocation and a database of localized product disposal options 222 to tell users how they can best dispose of their product.

For example, perhaps a user in one location does not have nearby access to recycling, but their region is suitable for composting, the process produces an output telling the user to compost their packaging. On the other hand, if there are recycling options, but no composting, the process will instead tell the user to recycle the product.

Although databases 206, 210, 214, 218 and 22 are depicted as separate databases, one skilled in the art would readily recognize that some or all of the databases may be combined into one data base. Also, each database may reside on one or more computers in different locations, connected via a computer network such as the Internet or local area networks. Similarly, the processes in blocks 202, 204, 208, 212, 216 and 220 may be executed on one or more computers connected via a computer network such as the Internet or local area networks. For example, the scanning in block 202 may be executed on a user's smart phone or a mobile device, while process 204 may be executed by a first server located in location X and process 206 may be executed by a second server located in location Y, and so on. Additionally, computer instructions for the process of the disclosures may be stored on a tangible storage medium, such as a computer memory or a memory device, so that when executed by one or more computer, the process is performed.

An output/report is then generated and displayed, in block 224. In some embodiments, the report includes a life cycle analysis page, where consumer can view the environmental benefit generated as a result of purchasing a product made with or a packaging with plastic-alternative. The report may also include data and information such as C02 relative reduction, water reduction, nutrification, acidification, product route, custom advertisements, philanthropy information, and/or customized product disposal solutions.

It is also noted that the present disclosure uses product or product packaging interchangeably for the purpose of determining the environmental footprint of the product or the packaging. However, it is understood that in some cases the product itself may be using plastic alternative material(s), while in other cases the packing may use plastic alternative material, such as stone.

It will be recognized by those skilled in the art that various modifications may be made to the illustrated and other embodiments of the invention described above,

without departing from the broad inventive scope thereof. It will be understood therefore that the invention is not limited to the particular embodiments or arrangements disclosed, but is rather intended to cover any changes, adaptations or modifications which are within the scope of the invention as defined by the appended claims.

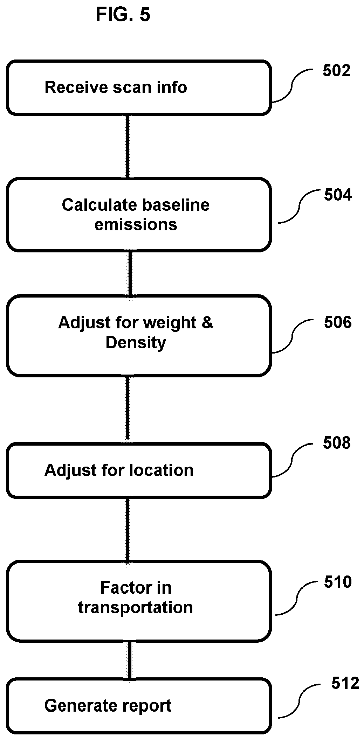

FIG. 5 is an exemplary process flow for determining an environmental footprint saving, according to some embodiments of the present disclosure. As shown in block 502, one or more server computers (having a receiving port) receive information from a user having a mobile device scanning a code on the product or packaging, via a computer communication network. In some embodiments, the received information includes time of the scan, geolocation of the user, user's language and information about the product or packaging. The location of the user (mobile device) may be automatically determined by the server. In block 504, a baseline emissions is calculated by quantifying an amount of conventional plastic production that has been avoided by using alternative material for the product or packaging by considering product or packaging weight and density.

In block 506, the environmental footprint saving is adjusted based on product or packaging weight and density is adjusted relative to weight and density of a plastic alternative. In some cases, an alternative packaging/product may be heavier or denser (or less heavy or less dense) compared to the type of material it is displacing. If the alternative material is heavier that the plastic it is displacing, then the level of carbon saving is adjusted (lowered), and vice versa. In block 508, the environmental footprint saving is adjusted based on the location of the place where the product was acquired. Transporting to deliver the product to a purchasing user has different carbon footprints, depending on difference locations. Environmental footprints may include carbon footprint, other greenhouse gas footprint and/or water footprint.

The carbon footprint of the transporting the product or packaging from an origination location to the location of where the product was acquired is also factored in for determining an environmental footprint saving, in block 510. A report is then generated, in block 224. The report is transmitted to the user over a computer network to be displayed on the user's mobile device. In some embodiments, the report includes a life cycle analysis page, where consumer can view the environmental benefit generated as a result of purchasing a product made with or a packaging with plastic- alternative. The report may also include data and information such as carbon dioxide relative reduction, water reduction, nutrification, acidification, product route, custom advertisements, philanthropy information, and/or customized product disposal solutions.

It will be recognized by those skilled in the art that various modifications may be made to the illustrated and other embodiments of the filter and filtering method described above, without departing from the broad inventive scope thereof. It will be understood therefore that the disclosure is not limited to the particular embodiments or arrangements disclosed, but is rather intended to cover any changes, adaptations or modifications which are within the scope of the disclosure as defined by the appended claims.

## Claims

1. A method executed on one or more computers for calculating environmental footprint for a product or packaging using plastic alternative material, the method comprising:

   receiving information from a user scanning a code on the product or the packaging, wherein the received information includes time of the scan, geolocation of the user, user's language and information about the product or packaging;

   storing information in a data structured stored in a computer readable medium, the data structure including geolocation of the user, information about the product or packaging, weight of a representative sample of original plastic material, weight of the plastic alternative product or packaging replacing plastic material, a location of an origin of the plastic alternative material and locations where the product or packaging travelled until it reached the user;

   calculating a baseline emissions by quantifying an amount of conventional

   plastic production that has been avoided by using alternative material for the product or packaging by considering product or packaging weight and density;

   calculating an environmental footprint based on product or packaging weight and density relative to weight and density of a plastic alternative, wherein the environmental footprint includes one or more of carbon footprint, greenhouse gas footprint and water footprint;

   adjusting the calculated environmental footprint based on location of where the product was acquired;

   when the plastic alternative material for the product or packaging is heavier than the plastic production that has been displaced, lowering the adjusted environmental footprint by $DAF_i$, wherein:

$$DAF_i = \frac{WO_i}{WAP_i}$$

where, $DAF_i$ is density adjustment for an original plastic material i, $WO_i$ is weight in grams of a representative sample of the original plastic material i, and $WAP$i is weight in grams of the plastic alternative productor packaging replacing plastic material i;

factoring in environmental footprint of transporting the product or packaging from an origination location to the location of where the product was acquired based on a distance that a distance that the product or packaging travelled from the origination location to the location of where the product was acquired;

producing a map displaying the location of an origin of the plastic alternative material and locations where the product or packaging travelled until it reached the user; and

generating an environmental footprint report for transmission to the user, wherein the report includes environmental benefits generated as a result of using plastic alternative material and the produced map, utilizing the calculated baseline emissions, adjusted environmental footprint saving and the carbon footprint of transporting the product or packaging.

2. The method of claim 1, further comprising determining best disposal options for the product or packaging utilizing the geolocation of the user.

3. The method of claim 1, wherein the report further includes customized disposal solutions and advertising.

4. The method of claim 1, wherein the report further includes water reduction, nutrification, acidification and product travel route.

5. The method of claim 1, further comprising comparing plastic alternative material with conventional plastic packaging and include said comparison in the report.

6. The method of claim 5, wherein the comparing plastic alternative material plastic packaging utilizes the following equation:

$$1 - ((N+ (D*T) /(P+(D*T))) \quad Eq. \qquad (1)$$

where P is the baseline, N is a plastic alternative carbon or water footprint, D is a distance that the product or packaging travelled from its origin to a point of purchase, T is a transportation factor, in miles or kilometer, and D is a distance in kilometers that the product has traveled.

7. The method of claim 1, further comprising calculating carbon dioxide and water footprint for using the plastic alternative material.

8. The method of claim 1, further comprising increasing or decreasing the environmental footprint based on incineration rates of the product or packaging at the location where the product was acquired.

9. The method of claim 1, wherein the plastic alternative material includes stone, or aggregate of minerals or mineraloid matter form the Earth.

**Patentansprüche**

1. Ein Verfahren, das auf einem oder mehreren Computern ausgeführt wird, zum Berechnen eines Umweltfußabdrucks für ein Produkt oder eine Verpackung unter Verwendung eines alternativen Kunststoffmaterials, wobei das Verfahren aufweist:

Empfangen von Informationen von einem Benutzer, der einen Code auf dem Produkt oder der Verpackung scannt, wobei die empfangenen Informationen die Zeit des Scans, die Geolokalisierung des Benutzers, die Sprache des Benutzers und Informationen über das Produkt oder die Verpackung beinhalten;
Speichern von Informationen in einer Datenstruktur, die in einem computerlesbaren Medium gespeichert ist, wobei die Datenstruktur die Geolokalisierung des Benutzers, Informationen über das Produkt oder die Verpackung, das Gewicht einer repräsentativen Probe des ursprünglichen Kunststoffmaterials, das Gewicht des alternativen Kunststoffprodukts oder der alternativen Verpackung, die Kunststoffmaterial ersetzt, einen Ort eines Ursprungs des alternativen Kunststoffmaterials und Orte, an denen das Produkt oder die Verpackung reiste, bis es den Benutzer erreichte, beinhaltet;

Berechnen einer Ausgangsemission durch Quantifizieren einer Menge an herkömmlicher Kunststoffproduktion, die durch Verwenden von alternativem Material für das Produkt oder die Verpackung unter Berücksichtigung des Gewichts und der Dichte des Produkts oder der Verpackung vermieden wurde;

Berechnen eines Umweltfußabdrucks basierend auf dem Gewicht und der Dichte des Produkts oder der Verpackung relativ zu dem Gewicht und der Dichte einer Kunststoffalternative, wobei der Umweltfußabdruck einen oder mehrere von Kohlenstofffußabdruck, Treibhausgasfußabdruck und Wasserfußabdruck beinhaltet;

Anpassen des berechneten Umweltfußabdrucks basierend auf dem Ort, an dem das Produkt erworben wurde;

wenn das alternative Kunststoffmaterial für das Produkt oder die Verpackung schwerer als die verdrängte Kunststoffproduktion ist, Senken des angepassten Umweltfußabdrucks um DAFi, wobei:

$$DAF_i = \frac{WO_i}{WAP_i}$$

wobei $DAF_i$ die Dichteanpassung für ein ursprüngliches Kunststoffmaterial i ist, $WO_i$ das Gewicht in Gramm einer repräsentativen Probe des ursprünglichen Kunststoffmaterials i ist und $WAP$i das Gewicht in Gramm des alternativen Kunststoffprodukts oder der alternativen Verpackung, die Kunststoffmaterial i ersetzt, ist;

Faktorisieren des Umweltfußabdrucks des Transportierens des Produkts oder der Verpackung von einem Ursprungsort zu dem Ort, an dem das Produkt erworben wurde, basierend auf einer Entfernung, die eine Entfernung ist, die das Produkt oder die Verpackung von dem Ursprungsort zu dem Ort, an dem das Produkt erworben wurde, zurückgelegt hat;

Erzeugen einer Karte, die den Ort eines Ursprungs des alternativen Kunststoffmaterials und Orte anzeigt, an denen das Produkt oder die Verpackung reiste, bis es den Benutzer erreichte; und

Erzeugen eines Umweltfußabdruckberichts zur Übertragung an den Benutzer, wobei der Bericht Umweltvorteile beinhaltet, die als ein Ergebnis der Verwendung des alternativen Kunststoffmaterials und der erzeugten Karte unter Verwendung der berechneten Ausgangsemissionen, der angepassten Umweltfußabdruckeinsparung und des Kohlenstofffußabdrucks des Transports des Produkts oder der Verpackung erzeugt werden.

2. Das Verfahren nach Anspruch 1, ferner aufweisend das Bestimmen der besten Entsorgungsoptionen für das Produkt oder die Verpackung unter Verwendung der Geolokalisierung des Benutzers.

3. Das Verfahren nach Anspruch 1, wobei der Bericht ferner kundenspezifische Entsorgungslösungen und Werbung beinhaltet.

4. Das Verfahren nach Anspruch 1, wobei der Bericht ferner Wasserreduktion, Überdüngung, Säuerung und Produktreiseroute beinhaltet.

5. Das Verfahren nach Anspruch 1, ferner aufweisend das Vergleichen von alternativem Kunststoffmaterial mit herkömmlicher Kunststoffverpackung und das Einschließen des Vergleichs in den Bericht.

6. Das Verfahren nach Anspruch 5, wobei das Vergleichen der Kunststoffverpackung mit alternativem Kunststoffmaterial die folgende Gleichung verwendet:

$$1 - ((N + (D*T) / (P + (D*T)))) \qquad \text{Gl. (1)}$$

wobei P die Ausgangslinie ist, N ein Kunststoff-alternativer Kohlenstoff- oder Wasserfußabdruck ist, D eine Entfernung ist, die das Produkt oder die Verpackung von seinem Ursprung zu einem Kaufpunkt zurückgelegt hat, T ein Transportfaktor in Meilen oder Kilometer ist und D eine Entfernung in Kilometern ist, die das Produkt zurückgelegt hat.

7. Das Verfahren nach Anspruch 1, ferner aufweisend das Berechnen von Kohlendioxid und Wasserfußabdruck zum Verwenden des alternativen Kunststoffmaterials.

8. Das Verfahren nach Anspruch 1, ferner aufweisend das Erhöhen oder Verringern des Umweltfußabdrucks basierend auf Verbrennungsraten des Produkts oder der Verpackung an dem Ort, an dem das Produkt erworben wurde.

9. Das Verfahren nach Anspruch 1, wobei das alternative Kunststoffmaterial Gestein oder Aggregat von Mineralien oder Mineraloidmaterial aus der Erde beinhaltet.

**Revendications**

1. Un procédé exécuté sur un ou plusieurs ordinateurs pour calculer une empreinte environnementale pour un produit ou conditionnement utilisant un matériau alternatif au plastique, le procédé comprenant les étapes consistant à :

recevoir de l'information en provenance d'un utilisateur scannant un code sur le produit ou le conditionnement, selon lequel l'information reçue comporte le temps du scan, la géolocalisation de l'utilisateur, la langue de l'utilisateur et de l'information sur le produit ou conditionnement ;
stocker l'information dans une structure de données stockée sur un support lisible par ordinateur, la structure de données comportant la géolocalisation de l'utilisateur, l'information sur le produit ou conditionnement, le poids d'un échantillon représentatif du matériau plastique d'origine, le poids du produit alternatif au plastique ou du conditionnement remplaçant le matériau plastique, une localisation d'une origine du matériau alternatif au plastique et des localisations dans lesquelles le produit ou conditionnement a été transporté jusqu'à ce qu'il ait atteint l'utilisateur ;
calculer des émissions de référence en quantifiant un montant de production plastique conventionnelle qui a été évité par l'utilisation de matériau alternatif pour le produit ou le conditionnement en considérant le poids et la densité du produit ou du conditionnement ;
calculer une empreinte environnementale sur la base du poids et de la densité du produit ou du conditionnement par rapport au poids et à la densité d'une alternative au plastique, selon lequel l'empreinte environnementale comporte une ou plusieurs empreintes parmi empreinte carbone, empreinte de gaz à effet de serre et empreinte hydrique ;
ajuster l'empreinte environnementale calculée sur la base de la localisation de là où le produit a été acquis ;
quand le matériau alternatif au plastique pour le produit ou le conditionnement est plus lourd que la production de plastique qui a été déplacée, diminuer l'empreinte environnementale ajustée par $DAF_i$, selon lequel :

$$DAF_i = \frac{WO_i}{WAP_i}$$

où, $DAF_i$ est un ajustement de densité pour un matériau plastique d'origine i, $WO_i$ est le poids en grammes d'un échantillon représentatif du matériau plastique d'origine i, et $WAP_i$ est le poids en grammes du produit alternatif au plastique ou du conditionnement remplaçant le matériau plastique i ;
prendre en compte dans l'empreinte environnementale le transport du produit ou conditionnement depuis une localisation d'origine à la localisation où le produit a été acquis sur la base d'une distance qui est une distance que le produit ou conditionnement a parcourue depuis la localisation d'origine à la localisation où le produit a été acquis ;
produire une carte affichant la localisation d'une origine du matériau plastique alternatif et des localisations où le produit ou conditionnement a été transporté jusqu'à ce qu'il atteigne l'utilisateur ; et
générer un rapport d'empreinte environnementale pour transmission à l'utilisateur, selon lequel le rapport comporte des bénéfices environnementaux générés en tant que résultat de l'utilisation du matériau plastique alternatif et la carte produite, en utilisant les émissions de référence calculées, l'économie d'empreinte environnementale ajustée et l'empreinte carbone du transport du produit ou conditionnement.

2. Le procédé selon la revendication 1, comprenant en outre une étape de détermination des meilleures options d'élimination pour le produit ou conditionnement en utilisant la géolocalisation de l'utilisateur.

3. Le procédé selon la revendication 1, selon lequel le rapport comporte en outre des solutions d'élimination personnalisées et de la publicité.

4. Le procédé selon la revendication 1, selon lequel le rapport comporte en outre la réduction en eau, la nutrification, l'acidification et l'itinéraire de transport du produit.

5. Le procédé selon la revendication 1, comprenant en outre une étape de comparaison du matériau alternatif au plastique avec le conditionnement plastique conventionnel et l'inclusion de ladite comparaison dans le rapport.

6. Le procédé selon la revendication 5, selon lequel la comparaison matériau alternatif au plastique conditionnement plastique utilise l'équation suivante :

$$1 - ((N+ (D^{*}T) / (P+(D^{*}T))) \quad \text{Eq.} \quad (1)$$

où P est la référence, N est une empreinte carbone ou hydrique de l'alternative au plastique, D est une distance que le produit ou le conditionnement a parcourue depuis son origine jusqu'à un point d'achat, T est un facteur de transport, en miles ou en kilomètres et D est une distance en kilomètres que le produit a parcourue.

7. Le procédé selon la revendication 1, comprenant en outre une étape de calcul d'empreinte hydrique et en dioxyde de carbone pour l'utilisation du matériau alternatif au plastique.

8. Le procédé selon la revendication 1, comprenant en outre une étape d'augmentation ou de diminution de l'empreinte environnementale sur la base de taux d'incinération du produit ou du conditionnement à la localisation où le produit a été acquis.

9. Le procédé selon la revendication 1, selon lequel le matériau alternatif au plastique comporte de la pierre ou des agrégats de minéraux ou de la matière minéraloïde en provenance de la Terre.

FIG. 1A

FIG. 1B

# FIG. 2

SCAN CODE
202

recipes for old and new packaging
206

PRODUCT PROCESS
204

local, country specific data
210

LOCATION PROCESS
208

transportation footprint
214

TRANSPORTATION PROCESS
212

Consumer profile
218

ADVERTISING PROCESS
216

disposal
222

END OF LIFE PROCESS
220

REPORT
224

**FIG. 3**

| Technical Information | Okeanos | Baseline Product |
|---|---|---|
| Material - 1 | PP | PP |
| % Material - 1 | 0% | 0% |
| Material - 2 | PLA | LDPE |
| % Material - 2 | 0% | 78% |
| Material - 3 | HDPE | HDPE |
| % Material - 3 | 49% | 22% |
| % Calcium Carbonate | 51% | 0% |
| Weight (g) | 5.2 | 3.9 |

**FIG. 4**

| Activity | Type | Unit | Average laden | | | |
|---|---|---|---|---|---|---|
| | | | kg $CO_2e$ | kg $CO_2$ | kg $CH_4$ | kg $N_2O$ |
| HGV (all diesel) | Rigid (>3.5 - 7.5 tonnes) | tonne.km | 0.52043 | 0.51410 | 0.00010 | 0.00623 |
| | | km | 0.48251 | 0.47664 | 0.00010 | 0.00577 |
| | | miles | 0.77652 | 0.76708 | 0.00016 | 0.00929 |
| | Rigid (>7.5 tonnes-17 tonnes) | tonne.km | 0.36835 | 0.36388 | 0.00007 | 0.00440 |
| | | km | 0.58928 | 0.58212 | 0.00012 | 0.00704 |
| | | miles | 0.94835 | 0.93683 | 0.00019 | 0.01133 |
| | Rigid (>17 tonnes) | tonne.km | 0.18306 | 0.18084 | 0.00004 | 0.00219 |
| | | km | 0.96432 | 0.95259 | 0.00019 | 0.01153 |
| | | miles | 1.55192 | 1.53304 | 0.00031 | 0.01856 |
| | All rigids | tonne.km | 0.21275 | 0.21017 | 0.00004 | 0.00254 |
| | | km | 0.80112 | 0.79138 | 0.00016 | 0.00958 |
| | | miles | 1.28928 | 1.27360 | 0.00026 | 0.01542 |
| | Articulated (>3.5 - 33t) | tonne.km | 0.14179 | 0.13932 | 0.00002 | 0.00245 |
| | | km | 0.77574 | 0.76223 | 0.00010 | 0.01341 |
| | | miles | 1.24844 | 1.22669 | 0.00016 | 0.02159 |

# FIG. 5

```
┌─────────────────────────────┐
│      Receive scan info      │ ⟋ 502
└─────────────────────────────┘
              │
┌─────────────────────────────┐
│     Calculate baseline      │ ⟋ 504
│        emissions            │
└─────────────────────────────┘
              │
┌─────────────────────────────┐
│     Adjust for weight &     │ ⟋ 506
│          Density            │
└─────────────────────────────┘
              │
┌─────────────────────────────┐
│      Adjust for location    │ ⟋ 508
└─────────────────────────────┘
              │
┌─────────────────────────────┐
│        Factor in            │ ⟋ 510
│      transportation         │
└─────────────────────────────┘
              │
┌─────────────────────────────┐
│      Generate report        │ ⟋ 512
└─────────────────────────────┘
```

**EP 4 437 435 B1**

**Patent documents cited in the description**

- US 2013311215 A1

- US 2021224819 A1